# DEMANDE DE BREVET EUROPEEN

(11) **EP 1 302 116 A1**
(43) Date de publication de la demande: **16.04.2003**
(21) Numéro de dépôt: 02292490.6
(22) Date de dépôt: 09.10.2002
(51) Int. Cl.: A23L 1/36, A23L 1/20, A21D 2/36, A21D 13/04

(54) **Aliment pour la nutrition humaine à base de graines de lin extrudées**

(30) Priorité: 10.10.2001 FR 0113038
(71) Demandeur: Valorex, 35133 Javené (FR)
(72) Inventeur: Weill, Pierre, 35770 Vern sur Seiche (FR)
(74) Mandataire: David, Daniel

(57) **Abrégé**

L'invention porte sur l'utilisation d'un ingrédient alimentaire pour l'alimentation humaine, comprenant des graines de lin extrudées.

Ces graines ont été obtenues notamment selon un procédé comprenant les étapes suivantes : broyage des graines, soumission des graines broyées à une imprégnation de vapeur préparatoire, soumission des graines broyées et imprégnées à une maturation jusqu'à un état pâteux, extrusion des graines par mise en pression et passage à travers une filière d'extrudeuse ainsi lubrifiée.

## Description

La présente invention se rapporte au domaine de l'alimentation humaine et en particulier vise un aliment destiné à abaisser la fréquence des maladies cardiovasculaires.

En matière de prévention des maladies cardio-vasculaire (MCV), on met en avant des facteurs de risque d'une part et des éléments de causalité d'autre part. Ainsi les taux sanguins élevés de cholestérol total de cholestérol LDL et de triglycérides sont associés à une augmentation du risque cardio-vasculaire. Parallèlement, un taux élevé d'acides gras Oméga 3' et particulièrement d'acide alpha-linolénique Oméga 3 (C18 :3 n-3) et /ou d'acide éïcosapentaénoïque Oméga 3 (C20 :5 n-3) est associé à une diminution de la fréquence des accidents cardio-vasculaires.

Il existe des techniques de nutrition destinées à abaisser les taux de cholestérol. Parmi les aliments ou nutriments, on trouve les huiles riches en acides gras Oméga 6 telles que les huiles de tournesol, les fibres alimentaires telles que le son de blé, les pectines, les fibres d'avoine, les phyto-stérols et les vitamines anti-oxydantes comme la vitamine E.

Cependant, aucune technique n'est aujourd'hui réellement satisfaisante :
Les huiles riches en acides gras en Oméga 6 font baisser le taux cholestérol sanguin, mais elles ne diminuent pas (voires elles augmentent dans certains essais) la mortalité cardio-vasculaire.
Les fibres alimentaires sont présentes à de fortes doses dans de nombreux fruits et légumes mais leur fractionnement pour enrichir des aliments courants ne donne pas de bons résultats ou alors à des doses très élevées.
Les phyto-stérols peuvent présenter des risques de toxicité.
Les essais de supplémentation de longue durée avec des vitamines anti-oxydantes se sont avérés décevants.

De plus on ne constate avec ces techniques aucune élévation du taux d'acides gras C18 :3 n-3 et C20 :5 n-3 circulants dans le sang.

Or l'acide alpha-linolénique (C18 : n-3) joue un rôle dans la prévention du risque cardio-vasculaire ; cela a été confirmé par des enquêtes épidémiologiques et des études d'intervention. Il joue un rôle aussi dans la prévention de la fibrillation ventriculaire et donc de la mort subite, ainsi que sur l'inhibition de l'agrégation plaquettaire. Cela a est montré par des études sur modèle animal.

Les enquêtes nutritionnelles révèlent par ailleurs des ingestions fortes de cet acide gras dans les populations à forte longévité. C'est la cas des Japonais qui sont de grands consommateurs d'huile de colza.

On connaît la graine de lin qui est riche, jusqu'à 55%, en acides gras Oméga 3, sous la forme C18 :3 n-3 exclusivement, mais aussi en fibres (mucilages) et en anti-oxydants (lignanes).

On a cherché à utiliser les potentialités de la graine de lin pour la nutrition de l'homme, en particulier, avec pour objectif la prévention des maladies cardio-vasculaires. Mais ces tentatives n'ont jusqu'à présent pas abouti.

La graine de lin présente des inconvénients. Ses constituants : acides gras, mucilages, lignanes sont faiblement digestibles lorsqu'elle est utilisée crue ou broyée. Ainsi, par exemple, des chercheurs ont fait consommer à des volontaires du pain et des biscuits contenant des graines de lin, de façon à obtenir une consommation moyenne de 50 g de graines de lin apportant 20g d'huile, par adulte et par jour. Malgré ces doses élevées, et de plus, en réduisant de 20g/jour l'apport d'autres graisses, saturées, les résultats furent décevants. Le niveau de cholestérol total avait baissé faiblement et celui des triglycérides pas du tout. Le taux sérique de C18 :3 n-3 avait augmenté mais pas celui de C20 :5 n-3 qui est le principal agent des effets anti-aggrégants, donc fluidifiant, du sang. En outre la graine présente des risques de toxicité en raison des facteurs anti-nutritionnels cyanogènes qu'elle contient.

L'huile de lin extraite de la graine permet d'augmenter faiblement les taux sériques d'acides gras Oméga 3, surtout C18 :3 n-3, mais n'a aucun effet sur le cholestérol ou les triglycérides. En outre elle est très vite peroxydée du fait de sa très forte insaturation et ne présente aucun intérêt nutritionnel élevé.

La présente invention a pour objet un ingrédient pour aliment destiné à la nutrition humaine contenant du lin qui ne présente pas les inconvénients de la graine de lin mais et qui permet de tirer bénéfices de ses potentialités.

Conformément à l'invention, on utilise pour l'alimentation humaine un ingrédient alimentaire comprenant des graines de lin extrudées obtenues selon un procédé dans lequel on soumet des graines broyées à une imprégnation de vapeur puis à une maturation jusqu'à un état pâteux et une extrusion par mise en pression et passage à travers une filière d'extrudeuse.

On a en effet trouvé avec surprise que l'ingestion de telles graines dans la ration alimentaire quotidienne, permettait à la fois de baisser le cholestérol total, le cholestérol LDL et les triglycérides, et d'augmenter les taux sériques d'acides gras Oméga 3, C18 :3 n-3 et C20 : 5 n-3.

Un tel aliment conduit donc à baisser la fréquence des maladies cardio-vasculaires.

On a constaté aussi que la graine ainsi traitée était facile à digérer par l'homme.

On a déjà proposé de réaliser un aliment pour animaux d'élevage permettant de produire de la viande enrichie en acides gras (n-3) polyinsaturés en lui incorporant des graines de lin et/ou des tourteaux de lin et en particulier des graines de lin extrudées. Toutefois rien n'incitait l'homme du métier à appliquer cet enseignement à l'alimentation humaine ; en effet, la graine de lin, du fait sans doute de sa teneur élevée en facteurs anti-nutritionnels cyanogènes d'une part, de la faible digestibilité de ses constituants glucidiques et lipidiques d'autre part n'a jamais été un ingrédient traditionnel de l'alimentation humaine. Seule une technologie nouvelle pouvait permettre de tirer bénéfice de ses constituants nutritionnels sans que les désavantages l'emportent.

Avantageusement les graines de lin extrudées ont été obtenues selon un procédé comprenant les étapes suivantes : broyage des graines, soumission des graines broyées à une imprégnation de vapeur préparatoire, soumission des graines broyées et imprégnées à une maturation jusqu'à un état pâteux, extrusion des graines par mise en pression et passage à travers une filière d'extrudeuse ainsi lubrifiée.

Un tel procédé est décrit dans la demande de brevet français déposée par la demanderesse le 16 mai 2000 sous le numéro FR 00 06 212.

Conformément à une autre caractéristique, on utilise un ingrédient alimentaire comprenant un composé cellulosique, amidonné ou protéique.

Conformément à une autre caractéristique, on utilise un ingrédient comprenant de 20 à 90% des dites graines de lin.

Conformément à une autre caractéristique on utilise l'ingrédient pour la préparation d'un aliment qui comprend de 1 à 10% des dites graines de lin.

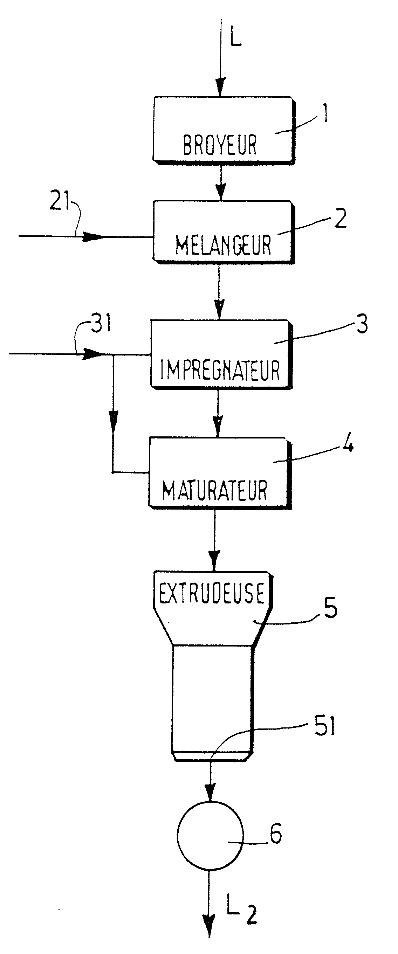

L'invention est décrite maintenant plus en détail en référence à la figure unique en annexe qui représente schématiquement une installation de mise en oeuvre du procédé d'extrusion préféré.

On soumet les graines à un traitement d'extrusion qui permet en outre de les détoxifier.

On introduit les graines de lin L dans un broyeur 1. Il peut s'agir d'un broyeur à rouleaux ou d'un broyeur à marteaux, par exemple, pourvu de grilles à orifices de sensiblement moins de 3 mm de passage. Les graines broyées passent ensuite dans un mélangeur 2 où elles sont mélangées avec un composé 21 cellulosique ou amidonné, par exemple des grains de céréales, des co-produits de grains de céréales, des tourteaux de graines oléagineuses ou encore des protéagineux.

Le mélange de graines broyées est envoyé dans un imprégnateur 3 où il est soumis à une phase d'imprégnation de vapeur 31 durant deux à trois minutes. Cette imprégnation déclenche l'hydrolyse des glucosides cyanogènes qui libère l'acide cyanhydrique très volatil. Une élévation de température trop rapide détruirait l'enzyme et empêcherait donc la libération d'acide cyanhydrique dans un milieu inorganique ; les cyanogènes resteraient intacts.

Le mélange de graines broyées et préparées est alors soumis à l'action de la vapeur 31 dans un maturateur 4 où il reste environ trente minutes, jusqu'à devenir pâteux, sans que sa température ne dépasse 100°C. Ensuite, les graines broyées, mélangées et imprégnées de vapeur sont envoyées dans une extrudeuse 5, ici à vis unique et à filière 51 plate ou conique, où elle passent rapidement, leur température de dépassant pas sensiblement 115°C. A la sortie de l'extrudeuse, le flash vapeur représente plus de 5% en poids du produit introduit dans l'extrudeuse. A la sortie de l'extrudeuse 5, les échanges avec l'air ambiant refroidissent les graines extrudées L2 qui sont ensuite séchées à l'air chaud 6 pour assurer une perte en poids supplémentaire de 5% au moins.

### On a procédé à un test de consommation

On a préparé un ingrédient alimentaire conforme à l'invention selon le procédé ci-dessus où l'on a mélangé au préalable 70% de graines de lin à 30% de son de blé. On a ensuite fabriqué du pain où l'on a remplacé 7% de la farine utilisée par l'ingrédient ainsi préparé.

32 volontaires sains ont consommé pendant 28 jours 80g en moyenne du pain ainsi fabriqué.

En moyenne ces volontaires ont donc consommé 4g de grain de lin par jour. Le pain a été consommé aux niveaux habituels de consommation de pain par les volontaires. L'huile contenue dans les graines a donc été consommée en plus des consommations habituelles de graisses. Une prise de sang a été effectuée en début et en fin de période d'essai pour analyse des constituants dont les valeurs sont rapportées dans le tableau ci-dessous.

| | | Début | Fin | Différence | Précision |
|---|---|---|---|---|---|
| Cholestérol total | G/l | 2,12 | 1,96 | -8% | P<0,001 |
| LDL Cholestérol | G/l | 1,29 | 1,21 | -6% | P<0,05 |
| HDL Cholestérol | G/l | 0,61 | 0,60 | | |
| Triglycérides | G/l | 1,1 | 0,72 | -35% | P<0,025 |
| | | | | | |
| C18:3n-3 | % AG | 0,64 | 0,83 | +30% | P<0,001 |
| C20:5n-3 | % AG | 0,70 | 0,95 | +36% | P<0,01 |

On a constaté une diminution assez nette du cholestérol total et LDL ainsi que des triglycérides. A cette diminution était associée une augmentation sensible des acides gras. On a noté aussi que chez les volontaires hyper-cholestérolémiés, l'effet était plus fort. La différence était de 10% pour le cholestérol total et de 8% pour le LDL. De même les effets étaient plus nets chez les volontaires présentant les taux sériques les plus bas.

Sans vouloir être lié par une quelconque explication, on estime que le traitement de détoxification appliqué à la graine préserve le profil des acides gras des graines. Il préserve aussi ou améliore la digestibilité des fibres et des phyto-oestrogènes. L'action des trois composants acides gras, mucilages et phyto-oestrogènes, se trouve alors combinée.
Il agit également sur la cinétique de libération des huiles. Celles-ci sont digérées lentement et approvisionnent régulièrement le système enzymatique de désaturation élongation qui métabolise le composé C20 :5n-3.

## Revendications

1. Utilisation pour l'alimentation humaine d'un ingrédient alimentaire comprenant des graines de lin extrudées obtenues selon un procédé dans lequel on soumet des graines broyées à une imprégnation de vapeur puis à une maturation jusqu'à un état pâteux et une extrusion par mise en pression et passage à travers une filière d'extrudeuse.

2. Utilisation selon la revendication précédente, dans laquelle l'ingrédient comprend un composé cellulosique, amidonné ou protéique.

3. Utilisation selon la revendication précédente, dans laquelle l'ingrédient comprend de 20 à 90% des dites graines de lin.

4. Utilisation selon l'une des revendications précédentes, dans laquelle l'ingrédient est incorporé dans un aliment de façon que celui-ci comprenne de 1 à 10 % des dites graines de lin.

5. Utilisation selon la revendication précédente dont l'aliment dans lequel l'ingrédient est incorporé est le pain.
